Europäisches Patentamt

European Patent Office

Office européen des brevets

(19)

(11) Veröffentlichungsnummer: **0 062 134**
A1

(12) ## EUROPÄISCHE PATENTANMELDUNG

(21) Anmeldenummer: 82100206.0

(22) Anmeldetag: 14.01.82

(51) Int. Cl.³: **G 01 P 3/495,** H 01 F 1/08, H 01 F 7/02

(30) Priorität: 02.04.81 DE 3113234

(71) Anmelder: **VDO Adolf Schindling AG, Gräfstrasse 103, D-6000 Frankfurt/Main (DE)**

(43) Veröffentlichungstag der Anmeldung: **13.10.82 Patentblatt 82/41**

(72) Erfinder: **Foerste, Rudolf, Dahlienweg 22, D-6382 Friedrichsdorf 1 (DE)**

(84) Benannte Vertragsstaaten: **DE FR GB SE**

(74) Vertreter: **Könekamp, Herbert, Dipl.-Ing., Sodener Strasse 9, D-6231 Schwalbach (DE)**

(54) **Dauermagnetkörper aus kunststoff-gebundenem Magnetmaterial, Verfahren zu seiner Herstellung sowie Wirbelstromtachometer mit einem solchen Dauermagnetkörper.**

(57) In einem Dauermagnetkörper aus kunststoffgebundenem Magnetmaterial geringer Permeabilität ist ein Kompensationswerkstoff fein verteilt vorgesehen. Dieser Kompensationswerkstoff kann während der Herstellung des Dauermagnetkörpers dem Werkstoff beigemischt werden. Besonders günstig gestaltet sich ein Wirbelstromtachometer, wenn er einen erfindungsgemäßen Dauermagnetkörper aufweist.

EP 0 062 134 A1

VDO Adolf Schindling AG

6ooo Frankfurt/Main
Gräfstr. 1o3

G-S US-do
1581
30.März 1981

- 1 -

Dauermagnetkörper aus kunststoff-gebundenem Magnetmaterial, Verfahren zu seiner Herstellung sowie Wirbelstromtachometer mit einem solchen Dauermagnetkörper

Die Erfindung bezieht sich auf einen Dauermagnetkörper
aus kunststoffgebundenem Magnetmaterial geringer
Permeabilität, welcher zugleich Kompensationswerkstoff
zur Kompensation des Temperatureinflusses hat. Weiterhin
bezieht sich die Erfindung auf ein Verfahren zur Herstellung eines solchen Dauermagnetkörpers sowie auf ein
Wirbelstromtachometer mit einem Dauermagnetkörper aus
kunststoffgebundenem Material geringer Permeabilität und
Kompensationswerkstoff zur Kompensation des Temperatureinflusses. Die Erfindung baut auf den durch die
DE-OS 22 32 422 bekannten Stand der Technik auf.

Für zahlreiche Anwendungsfälle ist es erforderlich, daß
die von dem Dauermagnetkörper erzeugte Kraftwirkung unabhängig von der Temperatur ist. Das für Dauermagnetkörper üblicherweise verwendete Material, wie zum Beispiel Barium-Strontium- oder Bleiferrit, ist jedoch stark
temperaturabhängig und zwar nimmt seine Permeabilität mit steigender Temperatur zu. Um diese Temperaturabhängigkeit zu kompensieren, lehrt die DE-OS 22 32 422,
an die Innenmantelfläche eines solchen Dauermagnetkörpers einen Ring aus Kompensationsmaterial anzubringen, dessen Permeabilität mit zunehmender Temperatur
abnimmt. Dadurch soll erreicht werden, daß insgesamt die
Permeabilität des Dauermagnetkörper konstant bleibt oder
sich sogar mit der Temperatur derart ändert, daß zugleich der mit zunehmender Temperatur zunehmende
elektrische Widerstand eines Wirbelstromdrehkörpers
mit kompensiert wird.

Bei dem vorbekannten Dauermagnetkörper werden seine vorteilhaften Eigenschaften mit einer Reihe von Nachteilen
erkauft. In der Praxis bereitet die Befestigung des Ringes
aus Kompensationsmaterial am Dauermagnetkörper Schwierigkeiten, da dieser Ring eine andere Wärmedehnung hat als
der Dauermagnetkörper und die Verklebung beider Teile
deshalb leicht infolge von Wärmespannungen sich löst.
Hiervon abgesehen verteuert sich der Dauermagnetkörper
natürlich durch das Erfordernis, einen separaten Ring
aus einem anderen Werkstoff in ihn einzusetzen. gegenüber nichttemperaturkompensierten Dauermagnetkörpern erheblich.

Der Erfindung liegt die Aufgabe zugrunde, einen Dauermagnetkörper der eingangs genannten Art zu entwickeln,
der besonders billig hergestellt werden kann, dessen
Temperaturabhängigkeit aber dennoch optimal kompensiert
ist. Weiterhin soll ein Verfahren zur Herstellung eines
solchen Dauermagnetkörpers sowie ein Wirbelstromtachometer aufgezeigt werden, welches dank des erfindungsgemäßen Dauermagnetkörpers besonders billig herstellbar
ist und zugleich exakt und zuverlässig arbeitet.

Diese Aufgaben werden durch die in den Ansprüchen 1, 2 und 6 angegebenen Maßnahmen gelöst.

Die Vorteile eines erfindungsgemäß gestalteten Dauermagnetkörpers ergeben sich in erster Linie dadurch, daß das Kompensationsmaterial in ihm gleichmäßig verteilt in unmittelbarer Nachbarschaft zu dem Magnetmaterial vorgesehen ist. Dadurch kann der Dauermagnetkörper in einem Arbeitsgang durch Spritzen hergestellt werden, so daß es nicht mehr erforderlich ist, in ihn ein separates Bauteil aus Kompensationsmaterial einzusetzen. Die Wirkung des erfindungsgemäßen Dauermagnetkörpers ist sogar besser als die des vorbekannten, da durch die gleichmäßige Verteilung des Kompensationswerkstoffes das Magnetmaterial sehr gut und gleichmäßig kompensiert wird. Als vorteilhaft hat es sich bei dem erfindungsgemäßen Dauermagnetkörper erwiesen, daß er nach dem Magnetisieren leicht auf eine genau erforderliche Stärke abgezogen werden kann, so daß ein genaues Eichen von mit dem Dauermagnetkörper ausgerüsteten Geräten möglich ist.

Das erfindungsgemäße Verfahren ist vorteilhaft, weil mit ihm auf einfache Weise temperaturkompensierte Dauermagnetkörper herstellbar sind. Die insgesamt benötigte Menge an Kompensationsmaterial ist geringer, als wenn ein separater Ring aus Kompensationswerkstoff eingesetzt wird, da - dank der feinen Verteilung des Kompensationswerkstoffes - dieser sich stets in unmittelbarer Nachbarschaft zu dem zu kompensierenden Magnetmaterial befindet. Als geeigneter Kompensationswerkstoff kann zum Beispiel eine 3o-prozentige Ni-Fe-Legierung verwendet werden.

Ein Wirbelstromtachometer mit dem erfindungsgemäßen Dauermagnetkörper ist sehr vorteilhaft, weil ein solches Tachometer sehr gut temperaturkompensiert ist, ohne daß dadurch seine Herstellung teuerer wird und ohne daß das Tachometer an Robustheit verliert.

Das erfindungsgemäße Verfahren zur Herstellung eines Dauermagnetkörpers kann am einfachsten wie im Anspruch 3 angegeben durchgeführt werden.

Um für verschiedene Geräte verschieden stark kompensierte Magnetkörper zu erzeugen, ist die im Anspruch 4 angegebene Verfahrensweise zweckmäßig. Da dabei leicht dafür gesorgt werden kann, daß die beiden Granulate gleichmäßige Größe haben, ist eine gleichmäßige Verteilung der Granulate mit Kompensationswerkstoff zwischen dem Granulat mit Magnetmaterial leicht zu erreichen.

Um mit einem möglichst geringen Kunststoffanteil im Dauermagnetkörper auszukommen, ist es günstig, sich der in Anspruch 5 angegebenen Verfahrensweise zu bedienen.

Abschließend sei nochmals die Herstellung des erfindungsgemäßen Dauermagnetmaterial verläutert. Beim Mischen und Kneten von pulverisiertem Magnetmaterial mit einem Kunststoffbinder wird zusätzlich eine gewisse Menge pulverisierter Kompensationswerkstoff (zum Beispiel 3o-prozentige Ni-Fe-Legierung) beigegeben. Durch Brechen der erkalteten Mischung entsteht ein spritzfertiges Granulat.

Um bei verschiedenen Geräte unterschiedliche Anteile von Kompensationswerkstoff im Dauermagnetkörper zu erhalten, besteht die Möglichkeit, den Kompensationswerkstoff mit Kunststoffbinder zu mischen und zu einem spritzfertigen Granulat zu brechen. Auf diese Weise kann dem granulierten, unkompensierten kunststoffgebundenen Magnetmaterial die erforderliche Menge granuliertes Kompensationsmaterial zugemischt werden, so daß sich nach dem Spritzvorgang

0062134

wieder ein gerätespezifisch kompensierter Dauermagnetkörper ergibt.

Eine Alternative zu dieser Verfahrensweise besteht darin, das Granulat mit Magnetmaterial zu erwärmen und dann mit einem Pulver aus Kompensationswerkstoff zu berieseln. Auch dadurch wird erreicht, daß sich der Kompensationswerkstoff gleichmäßig verteilt.

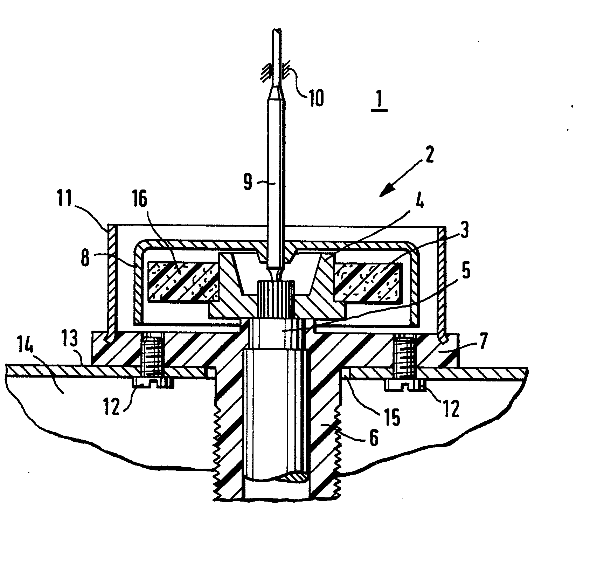

Die Erfindung sei anhand der Zeichnung näher erläutert.

Das Wirbelstromtachometer 1 enthält ein Wirbelstromsystem 2 mit einem kreisringförmigen Dauermagneten 3, der auf einem Träger 4 sitzt. Der Träger 4 ist auf das gerändelte Ende einer Welle 5 aufgepreßt, die in einer Lagerbuchse 6 mit einem Rand 7 drehbar gelagert ist. An ihrem dem Magneten 3 abgewandten Ende ist die Welle 5 mit einer nicht dargestellten flexiblen Antriebswelle verbunden, über die sie geschwindigkeitsabhängig angetrieben wird.

Der Magent 3 wird von einer Wirbelstromglocke 8 umfaßt, die auf einer Welle 9 sitzt. Die Welle 9 ist im magnetseitigen Ende der Welle 5 und in einem mit Abstand zu diesem Lagerpunkt angeordneten Lager 10 gelagert. Das Ende der Welle 9 trägt den nicht dargestellten Zeiger. Zur Verbesserung der Wirkung des Magnetfeldes auf die Glocke 8 ist deren zylindrischer Teil von einem Rückschlußring 11 aus einem ferromagnetischen Material umgeben, der im Rand 7 der Lagerbuchse 6 festgelegt ist.

Der Rand 7 der Lagerbuchse 6 ist mittels zweier Schrauben 12 an der Rückwand 13 des topfförmigen Tachometergehäuses 14

befestigt, wobei die Lagerbuchse 6 durch eine Öffnung 15 im Gehäuse 14 nach außen ragt.

Zur Temperaturkompensation ist im Dauermagneten 3 der Kompensationswerkstoff 16 fein verteilt vorhanden.

0062134

VDO Adolf Schindling AG

6000 Frankfurt/Main

Gräfstr. 1o3

G-S US-do
1581
30.März 1981

- 1 -

Ansprüche

1. Dauermagnetkörper aus kunststoffgebundenem Magnetmaterial geringer Permeabilität, welcher zugleich
Kompensationswerkstoff zur Kompensation des Temperatureinflusses hat,   dadurch gekennzeichnet,  daß der
Kompensationswerkstoff im Magneten fein verteilt vorgesehen ist.

2. Verfahren zur Herstellung eines Dauermagnetkörpers
aus kunststoffgebundenem Magnetmaterial geringer
Permeabilität, welcher zugleich Kompensationswerkstoff zur Kompensation des Temperatureinflusses hat,
dadurch gekennzeichnet,  daß der Kompensationswerkstoff während der Herstellung des Magnetwerkstoffes
diesem fein verteilt beigegeben wird.

3. Verfahren nach Anspruch 2, gekennzeichnet durch
folgende Verfahrensschritte:

   a) es wird ein Granulat aus Magnetmaterial und Kunststoff erzeugt,

0062134

b) es wird ein Granulat aus Kompensationswerkstoff und Kunststoff erzeugt,

c) die Granulate werden in einem gewünschten Verhältnis gemischt und in einer Spritzgußmaschine zur Erzeugung eines Dauermagnetkörpers verarbeitet.

5. Verfahren nach Anspruch 2, gekennzeichnet durch die folgenden Verfahrensschritte:

a) es wird ein Granulat aus Magnetmaterial und Kunststoff erzeugt,

b) das Granulat wird erwärmt,

c) über das erwärmte Granulat läßt man ein Pulver aus Kompensationswerkstoff rieseln.

6. Wirbelstromtachometer mit einem Dauermagnetkörper aus kunststoffgebundenem Material geringer Permeabilität und Kompensationswerkstoff zur Kompensation des Temperatureinflusses, dadurch gekennzeichnet, daß der Kompensationswerkstoff im Dauermagnetkörper fein verteilt vorgesehen ist.

1/1

0062134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 980 913 (PETERSON) * Spalte 5, Zeilen 19-25; Figur 8 * | 1 | G 01 P 3/495 H 01 F 1/08 H 01 F 7/02 |
| | --- | | |
| A | CH-A- 295 518 (SIEMENS) * Seite 2, Zeilen 9-20; Figur 4 * | 1,2 | |
| | --- | | |
| A,D | DE-A-2 232 422 (BAERMANN) * Seite 7, Zeilen 6-9; Figuren * | 1,6 | |
| | --- | | |
| A | DE-B-1 270 703 (MAGNETFABRIK BONN) * Spalte 1, Zeilen 16-26 * | 2,5 | |
| | ----- | | |

RECHERCHIERTE SACHGEBIETE (Int. Cl. 3)

G 01 P
H 01 F

Der vorliegende Recherchenbericht wurde für alle Patentansprüche erstellt.

| Recherchenort DEN HAAG | Abschlußdatum der Recherche 09-07-1982 | Prüfer HANSEN P. |
|---|---|---|